Europäisches Patentamt

European Patent Office

Office européen des brevets

(19)

(11) **EP 1 437 685 A2**

(12) **EUROPÄISCHE PATENTANMELDUNG**

(43) Veröffentlichungstag:
**14.07.2004 Patentblatt 2004/29**

(51) Int Cl.⁷: **G06T 5/00**

(21) Anmeldenummer: 03290078.9

(22) Anmeldetag: **13.01.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(71) Anmelder:
• **Philips Intellectual Property & Standards GmbH 20099 Hamburg (DE)**
Benannte Vertragsstaaten:
**DE**

• **Koninklijke Philips Electronics N.V. 5621 BA Eindhoven (NL)**

(72) Erfinder: **Die Erfindernennung liegt noch nicht vor**

(74) Vertreter: **Volmer, Georg, Dipl.-Ing.**
**Philips Intellectual Property & Standards GmbH, Postfach 50 04 42 52088 Aachen (DE)**

(54) **Verfahren zum Segmentieren einer dreidimensionalen Struktur**

(57)     Die Erfindung betrifft ein Verfahren zum Segmentieren einer dreidimensionalen Struktur aus einem dreidimensionalen Datensatz, der insbesondere medizinische Datenwerte enthält, mit Hilfe eines deformierbaren Modells. Die Oberfläche des deformierbaren Modells ist durch ein Netz mit Maschen gebildet, wobei die Maschen Netzpunkte an der Oberfläche des Modells miteinander verbinden und die Maschen in Gruppen eingeteilt sind. Jeder Gruppe ist eine Strukturfunktion zugeordnet, die ein Maß für die Wahrscheinlichkeit ist, daß ein Punkt des dreidimensionalen Datensatzes auf der Oberfläche der zu segmentierenden Struktur angeordnet ist. Nachdem das Modell an der Stelle im dreidimensionalen Datensatz angeordnet worden ist, an der sich die zu segmentierende Struktur befindet, wird für jede Masche jeweils ein Kandidatenpunkt ermittelt, für den die Strukturfunktion der entsprechenden Gruppe ein Extremum aufweist. Die Netzpunkte des Modells werden auf Grundlage der Kandidatenpunkte neu berechnet.

Fig. 5

EP 1 437 685 A2

**Beschreibung**

Die Erfindung betrifft ein Verfahren zum Segmentieren einer dreidimensionalen Struktur aus einem dreidimensionalen Datensatz, der insbesondere medizinische Datenwerte enthält, mit einem deformierbaren Modell. Die Oberfläche des deformierbaren Modells ist durch ein Netz mit Maschen gebildet, wobei die Maschen Netzpunkte an der Oberfläche des Modells miteinander verbinden. Die Erfindung bezieht sich außerdem auf eine Bildverarbeitungseinrichtung zur Durchführung dieses Verfahrens sowie auf ein Computerprogramm zur Steuerung der Bildverarbeitungseinrichtung.

Ein Verfahren der eingangs genannten Art ist aus einem Aufsatz von McInerney et al. "Deformable models in medical image analysis: a survey" in der Zeitschrift Medical Image Analysis, 1 (2):91-108, 1996, bekannt. Danach wird ein deformierbares Modell als eine elastische Oberfläche dargestellt, die bspw. durch Minimierung einer gewichteten Summe aus einer internen und einer externen sogenannten Energie ihre Form und Position verändern kann. Die interne Energie kann dabei jede Größe sein, die um so kleiner wird, je weniger das Modell deformiert wird, während die externe Energie jede Größe sein kann, die sich bei einer Annäherung des deformierbaren Modells an sogenannte Kandidatenpunkte, die wahrscheinlich auf der Oberfläche der zu segmentierenden Struktur angeordnet sind, verkleinert. Ein Kandidatenpunkt kann bspw. aus einer vorgegebenen Menge an Punkten im dreidimensionalen Datensatz, derjenige Punkt sein, für den die Wahrscheinlichkeit, auf der Oberfläche der zu segmentierenden Struktur angeordnet zu sein, am größten ist. Ein Maß für diese Wahrscheinlichkeit ist die Strukturfunktion F($x$). Um so größer der Wert der Strukturfunktion F($x$) ist, desto größer ist die Wahrscheinlichkeit, dass der Punkt $x$ im dreidimensionalen Datensatz auf einer Oberfläche der zu segmentierenden Struktur liegt.

In bekannten Verfahren haben die Maschen z. B. die Form eines Dreiecks, dessen Eckpunkte durch drei benachbarte Netzpunkte an der Oberfläche des Modells definiert sind. Entlang von Flächennormalen der Dreiecksflächen werden in dem dreidimensionalen Datensatz Kandidatenpunkte gesucht, für die die Strukturfunktion ein Maximum aufweist. Die Funktion F($x$) kann dabei bspw. durch den Gradienten der Datenwerte an der Stelle $x$ projiziert auf die Flächennormale gegeben sein.

Nachdem für die Maschen des die Oberfläche des Modells definierenden Netzes Kandidatenpunkte ermittelt worden sind, erfolgt eine Neuberechnung der Netzpunkte des Modells auf Basis der gefundenen Kandidatenpunkte. Dabei werden die Netzpunkte so berechnet, daß für die neu gefundenen Netzpunkte die gewichtete Summe aus interner und externer Energie ein Minimum einnimmt. Danach wird das Verfahren unter Zugrundelegung der neu berechneten Netzpunkte mehrfach wiederholt, wobei sich bei jeder Wiederholung das Modell der Form der zu segmentierenden Struktur annähert. Dieses iterative Verfahren ist beendet, sobald ein Abbruchkriterium, z.B. eine bestimmte Anzahl an Wiederholungen, erfüllt ist.

Nachteilig ist bei diesem Verfahren, dass eine Strukturfunktion für das gesamte deformierbare Modell verwendet wird, so dass Strukturen, deren Oberfläche variierende Eigenschaften aufweisen, nur unzureichend segmentiert werden können. Diese variierende Eigenschaft kann bspw. ein Gradient der Datenwerte sein, der für unterschiedliche Teile der Oberfläche in entgegengesetzte Richtungen zeigt. Bei anderen bekannten Verfahren wird jeder Masche bzw. jeder Dreiecksfläche eine Strukturfunktion zugeordnet, was zu einem hohen Rechenaufwand führt. Außerdem treten bei diesem Verfahren oft Segmentierungsfehler auf, da bei einer kleinen Verschiebung zwischen dem deformierbaren Modell und der zu segmentierenden Struktur, nicht mehr jede Strukturfunktion dem dazu gehörigen Oberflächenbereich der zu segmentierenden Struktur zugeordnet werden kann.

Es ist Aufgabe der vorliegenden Erfindung, ein Verfahren anzugeben, bei dem diese Segmentierungsprobleme weniger ausgeprägt sind. Diese Aufgabe wird gelöst durch ein Verfahren zum Segmentieren einer dreidimensionalen Struktur aus einem dreidimensionalen Datensatz, der insbesondere medizinische Datenwerte enthält, mit den Schritten:

a) Bereitstellen eines dreidimensionalen, deformierbaren Modells, dessen Oberfläche durch ein Netz mit Maschen gebildet ist, die Netzpunkte an der Oberfläche des Modells miteinander verbinden, wobei die Maschen in Gruppen eingeteilt sind und jeder Gruppe eine Strukturfunktion zugeordnet ist,

b) Anordnen des Modells an der Stelle im dreidimensionalen Datensatz, an der sich die zu segmentierende Struktur befindet,

c) Bestimmen je eines Kandidatenpunktes für jede Masche mit Hilfe der Strukturfunktion derjenigen Gruppe, deren Mitglied die jeweilige Masche ist,

d) Neuberechnen der Netzpunkte des Modells auf Basis der gefundenen Kandidatenpunkte,

e) Wiederholung der Schritte c) und d) unter Berücksichtigung der neu berechneten Netzpunkte solange ein Abbruchkriterium nicht erfüllt ist.

Im Gegensatz zu bekannten Verfahren sind bei der Erfindung die Maschen eines Modells in Gruppen eingeteilt und jeder Gruppe ist eine Strukturfunktion zugeordnet. Dies ermöglicht die Bestimmung von Kandidatenpunkten, die mit einer hohen Wahrscheinlichkeit auf einer Oberfläche der zu segmentierenden Struktur liegen, auch bei einer Oberfläche, die stark in ihren Eigenschaften variiert, was zu einer verbesserten Segmentierung führt. Die variierende Eigenschaft kann bspw., wie oben bereits erwähnt, die Richtung eines Gradienten der Datenwerte sein. Außerdem erfordert dieses Verfahren im Vergleich zur Zuordnung je einer Strukturfunktion zu jeder Masche einen geringeren Rechenaufwand.

Bei den Ausgestaltungen gemäß den Ansprüchen 2 und 3 weisen die Maschen einer Gruppe ähnliche Eigenschaften auf. Da ähnliche Eigenschaften der Maschen auf ähnliche Eigenschaften der entsprechenden Oberflächenbereiche der zu segmentierenden Struktur zurückzuführen sind, führt diese Gruppenbildung zu einer Differenzierung verschiedener Teile der Struktur, z.B. der verschiedenen Teile eines Organs oder eines Knochens.

Die Ansprüche 4 und 5 definieren bevorzugte Verfahren zur Bestimmung von Kandidatenpunkten.

Anspruch 6 definiert eine Strukturfunktion, und Anspruch 7 beschreibt ein bevorzugtes Verfahren zur Neuberechnung der Netzpunkte, das zu guten Segmentierungsergebnissen führt.

Eine Bildverarbeitungseinrichtung zur Durchführung des erfindungsgemäßen Verfahrens ist in Anspruch 8 beschrieben. Anspruch 9 definiert ein Computerprogramm zur Steuerung der Bildverarbeitungseinrichtung nach Anspruch 8.

Die Erfindung wird im Folgenden anhand der Zeichnungen näher erläutert. Es zeigen:

Fig. 1 eine zur Ausführung des erfindungsgemäßen Verfahrens geeignete Bildverarbeitungseinrichtung in schematischer Darstellung,

Fig. 2 ein Ablaufdiagramm des erfindungsgemäßen Verfahrens,

Fig. 3 ein Ablaufdiagramm eines Verfahrens zur Gruppeneinteilung von Maschen eines deformierbaren Modells,

Fig. 4 eine perspektivische Ansicht eines deformierbaren Modells einer linken Herzkammer,

Fig. 5 eine perspektivische Ansicht eines Femur-Modells und

Fig. 6 zwei Helligkeitswerte-Verteilungen der mittleren Datenvektoren zweier Gruppen,

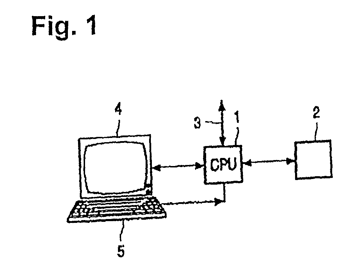

Die in Fig. 1 dargestellte Bildverarbeitungseinrichtung umfasst einen Bildverarbeitungsund Steuerprozessor 1 mit einem Speicher 2, in dem ein deformierbares Modell einer zu segmentierenden Struktur und ein dreidimensionaler Datensatz, der insbesondere medizinische Datenwerte enthält, gespeichert sein können. Der Bildverarbeitungs- und Steuerprozessor 1 kann z.B. mittels eines Glasfaserkabels 3 mit einer nicht näher dargestellten bildgebenden Einrichtung, wie einem Magnetresonanz- oder einem Computertomographiegerät, gekoppelt sein. Die von dem Bildverarbeitungs- und Steuerprozessor 1 segmentierte Struktur kann auf einem Monitor 4 wiedergegeben werden. Der Benutzer kann über eine Tastatur 5 oder durch andere, in Fig. 1 nicht näher dargestellte Eingabeeinheiten, auf den Bildverarbeitungs- und Steuerprozessor 1 zugreifen.

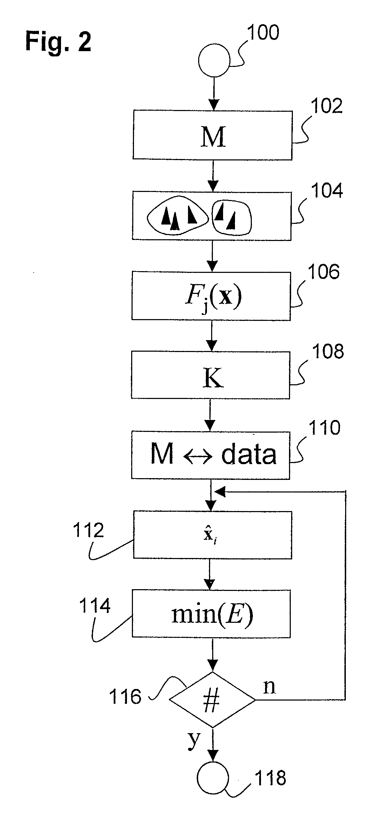

Fig. 2 zeigt den Ablauf eines Segmentierungsverfahrens, das mit der Bildverarbeitungseinrichtung nach Fig. 1 durchgeführt werden kann.

Nach einer Initialisierung im Schritt 100 wird im Schritt 102 das deformierbare Modell einer zu segmentierenden Struktur, in diesem Ausführungsbeispiel einer linken Herzkammer, bereitgestellt. Die Oberfläche des Modells ist dabei durch ein Netz mit Maschen gebildet, die Netzpunkte an der Oberfläche des Modells miteinander verbinden. Die Maschen haben die Form von Dreiecken, deren Eckpunkte durch jeweils drei benachbarte Netzpunkte an der Oberfläche des Modells definiert sind. Anstelle eines in dieser Weise triangulierten Modells könnte die Oberfläche auch durch eine beliebige Polygonstruktur definiert sein, bei dem die Maschen des Netzes nicht dreieckförmig sind, sondern eine von drei verschiedene Anzahl an Netzpunkten unter Bildung eines Polygons miteinander verbinden.

Ein deformierbares Modell kann aus mehreren Trainingsdatensätzen erzeugt werden, in denen jeweils das gleiche Objekt durch einen Fachmann manuell segmentiert wurde und die Oberflächen der segmentierten Objekte mit Netzen gleicher Topologie dargestellt werden. Gleiche Topologie bedeutet hier, dass jedes segmentierte Objekt die gleiche Anzahl an Maschen aufweist und dass die gleiche Masche in unterschiedlichen Trainingsdatensätzen die gleichen Nachbarmaschen hat. Wenn also die Maschen in jedem Datensatz numeriert werden und bspw. im ersten Datensatz die Masche Nr. 1 die Nachbarmaschen Nr. 2 bis Nr. 9 aufweist, so grenzt die Masche Nr. 1 auch in allen anderen Datensätzen an die Maschen Nr. 2 bis Nr. 9. Eine Mittelung, im einfachsten Fall eine arithmetische Mittelung, über alle segmentierten Objekte führt zu einem Objekt, dass als deformierbares Modell bezeichnet wird.

Das erfindungsgemäße Verfahren ist auch anwendbar, wenn das deformierbare Modell in anderen Ausführungsformen auf andere Art und Weise erzeugt worden ist, z.B. durch einfache Triangulation eines Modells einer linken Herzkammer. Ein häufig angewandtes Triangulationsverfahren ist aus dem Artikel "Marching cubes: A high resolution 3d surface construction algorithm.", W.E. Lorensen und H.E. Cline, Computer Graphics, 21(3):163-169, 1987 bekannt.

Die Maschen des deformierbaren Modells werden nun im Schritt 104 in Gruppen eingeteilt, wobei das erfindungsgemäße Verfahren mit jeder Methode zur Gruppeneinteilung durchführbar ist.

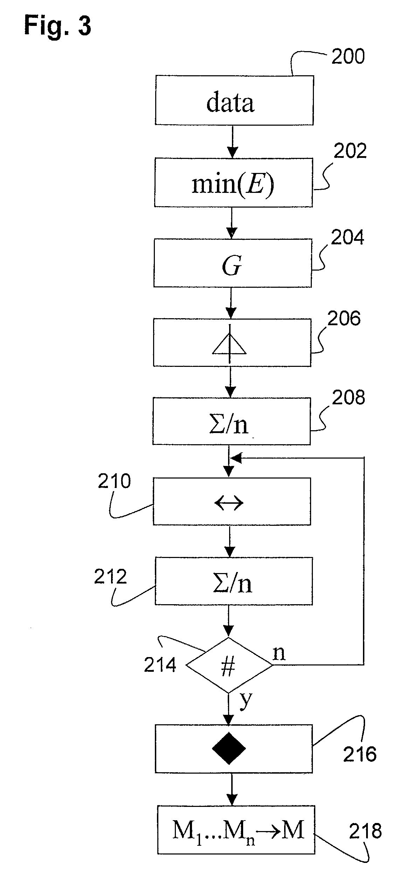

Eine Möglichkeit der Gruppeneinteilung ist in einer ersten Ausführungsform in Fig. 3 dargestellt. Zunächst werden im Schritt 200 $N$ Datensätze erzeugt, deren Datenwerte in diesem Ausführungsbeispiel jeweils eine linke Herzkammer darstellen. Im Schritt 202 wird dann das deformierbare Modell gemäß dem eingangs beschriebenen, bekannten Verfahren unter Minimierung der gewichteten Summe der internen und externen Energie an die Herzkammer in jedem Datensatz angepasst, was zu $N$ Modellen der Herzkammer führt, die alle die gleiche Topologie aufweisen.

Im Schritt 204 wird eine Anzahl $G$ an Gruppen gewählt, in die die Dreiecksflächen eingeteilt werden. Wenn die Oberfläche der zu segmentierenden Struktur verschiedene Bereiche aufweist, die sich im dreidimensionalen Datensatz erkennbar voneinander unterscheiden, so wird die Anzahl G bevorzugt so gewählt, dass sie gleich der Anzahl an unterschiedlichen Oberflächenbereichen ist. Dieser erkennbare Unterschied kann bspw. ein Gradient der Datenwerte sein, der für einen Oberflächenbereich in das Innere der zu segmentierenden Struktur gerichtet ist, und für einen anderen Oberflächenbereich nach außen weist. Es ist bekannt, dass genau diese unterschiedlichen Gradientenrichtungen bei der linken Herzkammer auftreten können, so dass in diesem Ausführungsbeispiel $G= 2$ gewählt wird.

Im folgenden Schritt 206 wird jeder Dreiecksfläche jedes Modells ein Merkmal zugeordnet.

Dieses Merkmal ist ein Datenvektor, der die Datenwerte (hier Helligkeitswerte) enthält, die auf der Flächennormalen der Dreiecksfläche liegen. Dabei verläuft die Flächennormale durch den Mittelpunkt der Dreiecksfläche, und der Datenvektor besteht bspw. aus 10 Datenwerten, die auf der Flächennormalen auf einer Seite der Dreiecksfläche liegen, aus einem Datenwert, der auf der Dreiecksfläche liegt, und aus weiteren 10 Datenwerten, die sich auf der anderen Seite bzw. jenseits der Dreiecksfläche befinden. In anderen Ausführungsformen könnten jeder Dreiecksfläche auch andere Merkmale zugeordnet werden, z.B. der Gradient der Datenwerte an der Stelle des Flächenmittelpunktes projiziert auf die Flächennormale. Auch mehr als ein Merkmal pro Dreiecksfläche ist möglich.

Ein mittleres Merkmal jeder Gruppe wird im Schritt 208 ermittelt. Dabei wird zunächst ein Merkmalsraum, der alle Werte enthält, die Merkmale, die den Dreiecksflächen zugeordnet worden sind, annehmen können, in $G$ Teilräume eingeteilt. Dann wird jeweils ein Mittelwert der Merkmale für jeden Teilraum bestimmt, und jeder Mittelwert eines Teilraums wird als Gruppenmerkmal definiert. In diesem Ausführungsbeispiel besteht der Merkmalsraum aus den Komponenten der Datenvektoren, wobei jede Komponente Werte zwischen 0 und 511 einnehmen kann. Der Merkmalsraum wird nun in zwei Teilräume aufgeteilt. Die Merkmale des ersten Raumes sind Datenvektoren deren Komponenten Werte zwischen 0 und 255 aufweisen, und die Merkmale des zweiten Raumes sind Datenvektoren, deren Komponenten Werte zwischen 256 und 511 haben. Eine arithmetische Mittelung ergibt als mittleres Merkmal des ersten Teilraumes einen Datenvektor, dessen Komponenten den Wert 127.5 haben. Der mittlere Datenvektor des zweiten Teilraumes weist entsprechend den Wert 383.5 auf. Somit ist das mittlere Merkmal der ersten Gruppe, also deren Gruppenmerkmal, der Datenvektor, dessen Komponenten den Wert 127.5 haben, und das entsprechende Merkmal der zweiten Gruppe ist der Datenvektor mit den Werten 383.5.

Im Schritt 210 werden die zugeordneten Merkmale aller Dreiecksflächen mit Hilfe eines Ähnlichkeitsmaßes mit allen Gruppenmerkmalen verglichen. Jede Dreiecksfläche wird dann der Gruppe zugeordnet, deren Gruppenmerkmal dem Merkmal der Dreiecksfläche gemäß dem Ähnlichkeitsmaß am ähnlichsten ist. Das Ähnlichkeitsmaß kann dabei jeder Ausdruck sein, der Merkmale der Dreiecksflächen bzw. der Gruppen miteinander vergleicht. Dies kann bspw. eine Korrelation der Datenvektoren zweier zu vergleichender Dreiecksflächen oder, wie in diesem Ausführungsbeispiel, die Norm der Differenz zweier Datenvektoren sein.

Nachdem jede Dreiecksfläche einer Gruppe zugeordnet worden ist, wird im Schritt 212 ein neues mittleres Merkmal für jede Gruppe, also jeweils ein neues Gruppenmerkmal, ermittelt. Dazu wird über die zugeordneten Merkmale aller Dreiecke einer Gruppe gemittelt, wobei in diesem Ausführungsbeispiel über die Datenvektoren der Dreiecke arithmetisch gemittelt wird. Das Ergebnis der arithmetischen Mittelung ist das neue Gruppenmerkmal.

Im Schritt 214 wird überprüft, ob ein Abbruchkriterium erfüllt ist. Dieses Abbruchkriterium kann bspw. eine vorbestimmte Anzahl an Iterationen oder auch eine kaum vorhandene Änderung der Gruppenmerkmale sein. Ist das Abbruchkriterium erfüllt, so wird mit Schritt 216 fortgefahren. Ansonsten wird das Verfahren mit dem Schritt 210 fortgeführt.

Da die Modelle in den unterschiedlichen Datensätzen die gleiche Topologie aufweisen, ist in jedem Modell eine Dreiecksfläche mit gleichen Nachbarschaftsbeziehungen vorhanden. Dreiecke mit den gleichen Nachbarschaftsbeziehungen können nun in mehreren Gruppen oder auch mehrmals in einer Gruppe enthalten sein. Diese Dreiecke werden im Schritt 216 der Gruppe zugeordnet, in der diese Dreiecke am häufigsten enthalten sind.

Aus den $N$ Modellen wird im Schritt 218 ein deformierbares Modell durch Mittelung erzeugt, indem jeweils bspw. über die Positionen aller Dreiecksflächen, die die gleichen Nachbarschaftsbeziehungen aufweisen, arithmetisch gemittelt wird.

Ausführlich ist dieses Verfahren in "Pattern Classification and Scene Analysis", Duda and Hart, Wiley, 1973, beschrieben, worauf hiermit verwiesen wird.

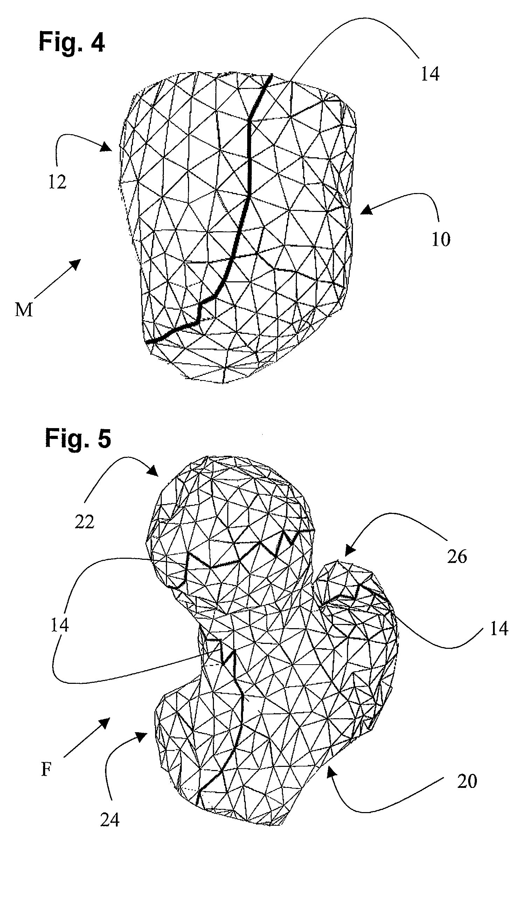

Die resultierende erste Gruppe 10, die zweite Gruppe 12 und die Gruppengrenze 14 des deformierbaren Modells M der linken Herzkammer sind in Fig. 4 dargestellt. Die Dreiecke, die in diesem Modell die erste Gruppe 10 bilden, entsprechen dem Bereich der linken Herzkammer, der die rechte Herzkammer berührt. D.h. durch die Gruppeneinteilung konnten verschiedene Teile des Herzens identifiziert werden. Diese Identifikation einzelner Bereiche der zu segmentierenden Struktur ist immer dann möglich, wenn die im Datensatz erkennbaren Eigenschaften der Struktur, die die einzelnen Bereiche der Struktur voneinander unterscheiden, als Merkmale zum Vergleich mittels eines Ähnlichkeitsmaßes genutzt werden. Die Identifizierung einzelner Bereiche der zu segmentierenden Struktur mittels der Gruppeneinteilung ermöglicht eine Extraktion dieser Bereiche, so dass sie getrennt voneinander weiterverarbeitet werden können.

Ein weiteres Beispiel dieser Identifizierung zeigt Fig. 5. Dort ist ein trianguliertes Femur-Modell F dargestellt, dessen Dreiecksflächen durch das oben beschriebene, erfindungsgemäße Verfahren in vier Gruppen 20, 22, 24, 26 aufgeteilt worden sind. Auch hier sind durch die Gruppeneinteilung Teile der zu segmentierenden Struktur identifiziert worden. So definiert die Gruppe 22 den Femurkopf und die Gruppe 26 den größeren Trochanter.

Durch geeignete Wahl der zu vergleichenden Merkmale und des Ähnlichkeitsmaßes ist es also möglich, unterschiedliche Teile einer zu segmentierenden Struktur, wie bspw. eines Organs oder eines Knochens, zu identifizieren, die dann aus dem Datensatz extrahiert und individuell weiterverarbeitet werden können.

In einer anderen Ausführungsform wird zur Einteilung der Dreiecksflächen des deformierbaren Modells in Gruppen zunächst ein Dreieck willkürlich ausgewählt, dessen Merkmal mit dem Merkmal eines angrenzenden, benachbarten Dreiecks verglichen wird. Merkmale sind hier die oben beschriebenen Datenvektoren. Das Verfahren ist aber auch mit anderen Merkmalen ausführbar. Verglichen werden die Dreiecksflächen mit dem ebenfalls bereits oben erläuterten Ähnlichkeitsmaß, wobei zwei Dreiecksflächen als ähnlich angesehen werden, wenn das Ähnlichkeitsmaß einen bestimmten Schwellwert über- oder unterschreitet. Dies kann bspw, ein Überschreiten des Schwellwertes 0,9 bei der Korrelation zweier Datenvektoren oder ein Unterschreiten des Schwellwertes 0,1 bei der Norm der Differenz zweier Datenvektoren sein. Sind die beiden Dreiecke ähnlich, so bilden die beiden Dreiecke eine erste Gruppe und ein oder mehrere Gruppenmerkmale werden durch Mittelung über die einzelnen Merkmale der Dreiecke bestimmt. In diesem Ausführungsbeispiel könnten z.B. die einzelnen Komponenten der Datenvektoren arithmetisch gemittelt werden, so dass für diese Gruppe ein mittlerer Datenvektor generiert wird. Dann wird genauso mit einem weiteren benachbarten Dreieck verfahren, wobei dann der Datenvektor dieses Dreiecks mit dem mittleren Datenvektor der Gruppe verglichen wird. Dieses Verfahren wird fortgeführt, bis keines der zu den Dreiecken der Gruppe benachbarten Dreiecke mehr dem mittleren Datenvektor der Gruppe ähnlich ist. Dann wird ein weiteres, gruppenloses Dreieck ausgewählt, mit dem unter Bildung einer zweiten Gruppe das eben beschriebene Verfahren wiederholt wird. Dieses Vorgehensweise wird wiederholt, bis jedes Dreieck einer Gruppe zugeordnet worden ist.

Eine weitere Ausführungsform der Gruppeneinteilung ist die manuelle Einteilung durch einen Experten, der Maschen, die bezüglich eines oder mehrerer Merkmale der zu segmentierenden Struktur ähnlich sind, zusammenfasst.

Im Schritt 106 wird jeder Gruppe eine Strukturfunktion zugeordnet, wobei als Strukturfunktion jede Funktion dienen kann, die einen großen Wert liefert, wenn ein Kandidatenpunkt mit einer großen Wahrscheinlichkeit auf der Oberfläche der zu segmentierenden Struktur liegt. Da unterschiedliche Bereiche der Oberfläche der zu segmentierenden Struktur unterschiedliche Eigenschaften aufweisen können, ist es sinnvoll, für diese Bereiche jeweils eine eigene Strukturfunktion zu definieren.

Ein Kandidatenpunkt kann eine Kandidaten-Dreiecksfläche definieren. Hierbei ist die Kandidaten-Dreiecksfläche eine zur Anpassung an eine zu segmentierende Struktur in Richtung der Flächennormalen einer Dreiecksfläche des Modells verschobene Dreiecksfläche. Der Kandidatenpunkt ist dann der Schnittpunkt der Kandidaten-Dreiecksfläche mit der Flächennormalen.

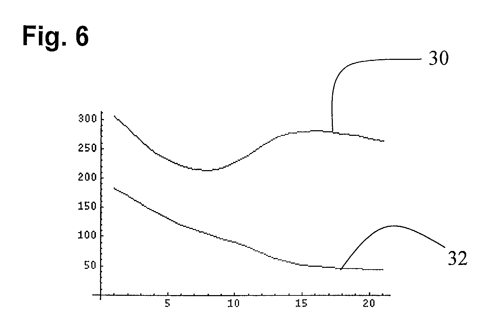

Zur Bestimmung der Strukturfunktionen wird, wenn dies nicht bereits geschehen ist, über die Merkmale der Dreiecksflächen einer Gruppe, also in diesem Ausführungsbeispiel über die entsprechenden Datenvektoren, wie oben bereits beschrieben, gemittelt. Das resultierende Gruppenmerkmal bzw. der mittlere Datenvektor definiert die Strukturfunktion der Gruppe. Den mittleren Datenvektor 30 der Gruppe 10 und den mittleren Datenvektor 32 der Gruppe 12 zeigt Fig. 6. Dort ist auf der vertikalen Achse der Helligkeitswert und auf der horizontalen Achse ein Index, der die Datenwerte entlang der Flächennormalen zählt, aufgetragen.

Die Strukturfunktion ist in diesem Ausführungsbeispiel ein Maß für die Übereinstimmung eines Merkmals eines Kandidatenpunktes bzw. der durch den Kandidatenpunkt definierten Kandidaten-Dreiecksfläche mit dem entsprechenden Gruppenmerkmal, wobei als Maß für die Übereinstimmung das oben beschriebene Ähnlichkeitsmaß verwendet werden kann. So kann die Strukturfunktion bspw. der Kehrwert der Norm der Differenz des Datenvektors einer Kandidaten-Dreiecksfläche und des Datenvektors der entsprechenden Gruppe sein.

Für jede Masche des deformierbaren Modells wird im Schritt 108 eine Konfidenz mit einem Konfidenzmaß bestimmt. Die Konfidenz einer Masche gibt an, wie gut eine Masche in ihre jeweilige Gruppe passt. Bei einer hohen Konfidenz besteht eine große Sicherheit, dass diese Masche aufgrund ihrer Merkmale wirklich der jeweiligen Gruppe zugeordnet werden konnte. Bei einer geringen Konfidenz ist die Zugehörigkeit zu einer Gruppe weniger sicher.

Eine Möglichkeit, ein Konfidenzmaß anzugeben, ist das oben beschriebene Ähnlichkeitsmaß. Sind die Merkmale eines Dreiecks und einer Gruppe gemäß dem Ähnlichkeitsmaß sehr ähnlich, so ist auch die Konfidenz groß. Das Resultat des Ähnlichkeitsmaßes könnte also direkt als Konfidenz genutzt werden.

Ein weiteres Konfidenzmaß liefert die in Fig. 3 gezeigte Gruppeneinteilung. Dort wird im Schritt 216 für Dreiecksflächen mit gleichen Nachbarschaftsbeziehungen, bzw., nachdem über diese Dreiecksflächen im Schritt 218 gemittelt worden ist, für jede Dreiecksfläche, die Häufigkeit der Gruppenzugehörigkeit bestimmt. Um so größer diese Häufigkeit für eine Dreiecksfläche ist, desto besser stimmen die Merkmale dieser Dreiecksfläche mit den Gruppenmerkmalen überein. Die Häufigkeit der Gruppenzugehörigkeit kann also als Konfidenz verwendet werden.

Das deformierbare Modell der linken Herzkammer wird im Folgenden zur automatischen Segmentierung einer linken Herzkammer in einem dreidimensionalen Datensatz genutzt.

Dazu wird zunächst im Schritt 110 das deformierbare Modell relativ zur zu segmentierenden Struktur so ausgerichtet, dass die Oberfläche des Modells möglichst gut mit den Konturen der zu segmentierenden Struktur übereinstimmt.

Im Schritt 112 wird für jede Dreiecksfläche der Oberfläche des deformierbaren Modells jeweils ein Kandidatenpunkt $\mathbf{x}_i$ ermittelt. Der Kandidatenpunkt $\mathbf{x}_i$ liegt dabei auf der Flächennormalen des Dreiecks und auf einer Kandidaten-Dreiecksfläche. Die Position des Kandidatenpunktes $\hat{\mathbf{x}}_i$ auf der Flächennormalen wird nun so gewählt, dass die Strukturfunktion $F_j(\hat{\mathbf{x}}_i)$ der Gruppe, zu der die jeweilige Dreiecksfläche gehört, ein Maximum aufweist. Die Indizes $i$ und $j$ bezeichnen hierbei verschiedene Kandidatenpunkte bzw. Gruppen.

Nachdem für alle Dreiecksflächen der Oberfläche des deformierbaren Modells jeweils ein Kandidatenpunkt ermittelt worden ist, erfolgt im Schritt 114 eine Anpassung der Oberfläche des deformierbaren Modells an die gefundenen Kandidatenpunkte. Dabei wird das Modell so deformiert, daß die sogenannte Energiefunktion

$$E = E_{\mathrm{int}} + \alpha E_{\mathrm{ext}} \qquad (1)$$

ein Minimum einnimmt. Hierbei ist $E_{\mathrm{ext}}$ die externe Energie, die die Dreiecksflächen in Richtung der im Schritt 112 ermittelten Kandidatenpunkten bewegt, während $E_{\mathrm{int}}$ die interne Energie ist, die einer Deformation des Netzes entgegenwirkt. Der Gewichtungsfaktor □ ist typischerweise so gewählt, daß die beiden Energien in gleichen Teilen zur Gesamtenergie beitragen.

Als externe Energie kann jede Größe herangezogen werden, die sich bei einer Annäherung des deformierbaren Modells an die durch die Kandidatenpunkte definierte Struktur verkleinert. In diesem Ausführungsbeispiel wird die externe Energie $E_{\mathrm{ext}}$ durch folgende Gleichung beschrieben:

$$E_{\mathrm{ext}} = \sum_{\Delta} w_i(\mathbf{x}_i - \hat{\mathbf{x}}_i)^2, \qquad (2)$$

wobei über sämtliche Dreiecke summiert wird. Der Gewichtungsfaktor $w_i$ berechnet sich nach folgender Gleichung:

$$w_i = \max\{0, F_j(\hat{\mathbf{x}}_i)\}. \qquad (3)$$

Gemäß Gleichung (3) werden Kandidatenpunkte $\hat{\mathbf{x}}_i$, deren Merkmale gut mit den Merkmalen der entsprechenden Gruppe des Modells übereinstimmen, stärker gewichtet als andere Kandidatenpunkte.

In anderen Ausführungsformen könnten die Gewichtungsfaktoren $w_i$ auch die im Schritt 108 ermittelte Konfidenz berücksichtigen. So könnten Kandidatenpunkte, die eine geringere Konfidenz aufweisen, weniger zur externen Energie beitragen als Kandidatenpunkte, für die eine größeres Konfidenz bestimmt worden ist. Auch könnte die Schwankungsbreite der jeweiligen Gruppe berücksichtigt werden. Kandidatenpunkte einer Gruppe mit einer großen Schwankungsbreite, in denen also die Merkmale mehrerer Dreiecksflächen von dem mittleren Merkmal der Gruppe stark abweichen, sollten mit einem geringeren Gewicht berücksichtigt werden, als Kandidatenpunkte einer Gruppe, die eine kleinere Schwankungsbreite aufweist.

Die interne Energie $E_{int}$ kann jede Größe sein, die um so kleiner wird, je weniger das Modell deformiert wird. In diesem Ausführungsbeispiel berechnet sich interne Energie nach der Beziehung

$$E_{int} = \sum_{i=1}^{V} \sum_{j \in N(i)} ((\mathbf{x}_i - \mathbf{x}_j) - s\mathbf{R}\Delta_{ij})^2. \qquad (4)$$

Hierbei ist V die Anzahl der Dreiecksflächen des Modells, $s$ ein Skalierungsfaktor, $\mathbf{R}$ eine Rotationsmatrix und $\Delta_{ij}$ der Abstand zwischen zwei Mittelpunkten zweier Dreiecksflächen des ursprünglichen, undeformierten Modells. Die Menge N($i$) beinhaltet die Mittelpunkte derjenigen Dreiecksflächen, die zur Dreiecksfläche mit dem Mittelpunkt $\mathbf{x}_i$ benachbart sind. Bei der erstmaligen Minimierung der Energie gemäß Gleichung (1) ist $s$ = 1, und R ist die Einheitsmatrix.

Nachdem durch Minimierung der Energie gemäß Gleichung (1) die Mittelpunkte $\mathbf{x}_i$ der Dreiecksflächen des deformierten Modells ermittelt worden sind, werden ein neuer Skalierungsfaktor $s$ und eine neue Rotationsmatrix $\mathbf{R}$ bestimmt. Dabei werden unter Berücksichtigung der aktuellen Mittelpunkte $\mathbf{x}_i$ der Skalierungsfaktor und die Rotationsmatrix so gewählt, dass die interne Energie minimal wird. In anderen Ausführungsformen könnten die Mittelpunkte $\mathbf{x}_i$, der Skalierungsfaktor $s$ und die Rotationsmatrix $\mathbf{R}$ gleichzeitig bestimmt werden, indem bei der Bestimmung des Minimums der Gesamtenergie $E$ auch der Skalierungsfaktor und die Rotationsmatrix variabel sind.

Nachdem im Schritt 114 das deformierbare Modell an die zu segmentierende Struktur angepaßt worden ist, wird im Schritt 116 geprüft, ob ein Abbruchkriterium erfüllt ist. Dieses Abbruchkriterium kann z.B. eine vorbestimmte Anzahl an Wiederholungen der Schritte 112 und 114 sein oder eine kaum noch vorhandene Änderung der Lage der Netzpunkte. Ist dieses Abbruchkriterium erfüllt, so endet das Segmentierungsverfahren im Schritt 118. Ist das Abbruchkriterium dagegen noch nicht erfüllt, so wird das Verfahren mit dem Schritt 112 fortgeführt.

Das nach dem Segmentierungsverfahren erhaltene Modell kann gespeichert und auf dem Monitor dargestellt werden. Es stellt die Segmentierung der in dem dreidimensionalen Datensatz enthaltenen zu segmentierenden Struktur dar.

Nachdem die Schritte 100 bis 108 einmal durchgeführt worden sind, ist ein deformierbares Modell mit Maschen, die in Gruppen eingeteilt worden sind, und mit Strukturfunktionen, die den Gruppen zugeordnet worden sind, vorhanden. Daher kann bei der Segmentierung weiterer Strukturen auf dieses Modell zurückgegriffen werden, so dass die Schritte 104 bis 108 entfallen können.

BEZUGSZEICHENLISTE

Verfahren zum Segmentieren einer dreidimensionalen Struktur

| | |
|---|---|
| M | Deformierbares Modell der linken Heizkammer |
| F | Deformierbares Femur-Modell |
| 1 | Bildverarbeitungs- und Steuerprozessor |
| 2 | Speicher |
| 3 | Glasfaserkabel |
| 4 | Monitor |
| 5 | Tastatur |
| 10, 12 | Gruppen von Dreiecksflächen des Modells der linken Herzkammer |
| 14 | Grenzlinie zwischen Gruppen |
| 20, 22, 24, 26 | Gruppen von Dreiecksflächen des Femur-Modells |
| 30, 32 | Mittlerer Datenvektor einer Gruppe |

**Patentansprüche**

1. Verfahren zum Segmentieren einer dreidimensionalen Struktur aus einem dreidimensionalen Datensatz, der insbesondere medizinische Datenwerte enthält, mit den Schritten:

   a) Bereitstellen eines dreidimensionalen, deformierbaren Modells, dessen Oberfläche durch ein Netz mit Maschen gebildet ist, die Netzpunkte an der Oberfläche des Modells miteinander verbinden, wobei die Maschen in Gruppen eingeteilt sind und jeder Gruppe eine Strukturfunktion zugeordnet ist,

   b) Anordnen des Modells an der Stelle im dreidimensionalen Datensatz, an der sich die zu segmentierende Struktur befindet,

   c) Bestimmen je eines Kandidatenpunktes für jede Masche mit Hilfe der Strukturfunktion derjenigen Gruppe, deren Mitglied die jeweilige Masche ist,

   d) Neuberechnen der Netzpunkte des Modells auf Basis der gefundenen Kandidatenpunkte,

   e) Wiederholung der Schritte c) und d) unter Berücksichtigung der neu berechneten Netzpunkte solange ein Abbruchkriterium nicht erfüllt ist.

2. Verfahren nach Anspruch 1, wobei der Schritt a) folgenden Schritte umfasst:

   - Bereitstellen eines dreidimensionalen, deformierbaren Modells, dessen Oberfläche durch ein Netz mit Maschen gebildet ist, die Netzpunkte an der Oberfläche des Modells miteinander verbinden,

   - Vergleichen jeder Masche mit jeder angrenzenden, benachbarten Masche mit einem Ähnlichkeitsmaß,

   - Zusammenfassen von gemäß dem Ähnlichkeitsmaß ähnlichen, benachbarten Maschen zu Gruppen,

   - Zuordnen je einer Strukturfunktion zu jeder Gruppe.

3. Verfahren nach Anspruch 1, wobei der Schritt a) folgende Schritte umfasst:

   - Bereitstellen von jeweils einem dreidimensionalen, deformierbaren Modell in mehreren Datensätzen, wobei alle Modelle die gleiche Anzahl an Maschen und die Maschen in jedem Modell die gleichen Nachbarschaftsbeziehungen aufweisen,

   - Zusammenfassen der Maschen aller Modelle zu Gruppen,

   - Zuordnen der Maschen mit gleichen Nachbarschaftsbeziehungen zu derjenigen Gruppe, in der diese Maschen am häufigsten enthalten sind,

   - Zuordnen je einer Strukturfunktion zu jeder Gruppe,

   - Mittelung über die Modelle der dreidimensionalen Datensätze zur Ermittlung eines deformierbaren Modells.

4. Verfahren nach Anspruch 1, **dadurch gekennzeichnet, dass** im Schritt c) aus einer Menge an Punkten derjenige Punkt als Kandidatenpunkt einer Masche ermittelt wird, für den die Strukturfunktion ein Extremum, insbesondere ein Maximum aufweist.

5. Verfahren nach Anspruch 1, **dadurch gekennzeichnet, dass** im Schritt c) ein Kandidatenpunkt einer Masche an der Stelle auf einer Normalen der durch die Masche umschlossenen Fläche ermittelt wird, an der die Strukturfunktion ein Extremum, insbesondere ein Maximum aufweist.

6. Verfahren nach Anspruch 1, **dadurch gekennzeichnet, dass** der Wert der Strukturfunktion an einer bestimmten Stelle im dreidimensionalen Datensatz ein Maß für die Wahrscheinlichkeit ist, dass diese bestimmte Stelle auf einer Oberfläche der zu segmentierenden Struktur angeordnet ist.

**7.** Verfahren nach Anspruch 1, **dadurch gekennzeichnet, dass** im Schritt d) die Netzpunkte unter Minimierung einer gewichteten Summe aus externer und interner Energie neu berechnet werden.

**8.** Bildverarbeitungseinrichtung zur Durchführung des Verfahrens nach Anspruch 1 mit

- einer Speichereinheit zum Speichern mindestens eines deformierbaren Modells, dessen Oberfläche durch ein Netz mit Maschen gebildet ist, die Netzpunkte an der Oberfläche des Modells miteinander verbinden, und zum Speichern mindestens eines dreidimensionalen Datensatzes, der insbesondere medizinische Datenwerte enthält,

- einer Bildwiedergabeeinheit zur Wiedergabe einer zu segmentierenden bzw. segmentierten Struktur und des mindestens einen deformierbaren Modells,

- einer Berechnungseinheit zur Neuberechnung der Netzpunkte des mindestens einen Modells,

- einer Anordnungseinheit zum Anordnen des Modells, an der Stelle im dreidimensionalen Datensatz, an der sich die zu segmentierende Struktur befindet,

- einer Steuereinheit zur Steuerung der Speichereinheit, der Bildwiedergabeeinheit, der Berechnungseinheit und der Anordnungseinheit entsprechend den folgenden Schritten:

    a) Bereitstellen eines dreidimensionalen, deformierbaren Modells, dessen Oberfläche durch ein Netz mit Maschen gebildet ist, die Netzpunkte an der Oberfläche des Modells miteinander verbinden, wobei die Maschen in Gruppen eingeteilt sind und jede Gruppe eine Strukturfunktion aufweist,

    b) Anordnen des Modells an der Stelle im dreidimensionalen Datensatz, an der sich die zu segmentierende Struktur befindet,

    c) Bestimmen je eines Kandidatenpunktes für jede Masche mittels der Strukturfunktion derjenigen Gruppe, deren Mitglied die jeweilige Masche ist,

    d) Neuberechnen der Netzpunkte des Modells auf Basis der gefundenen Kandidatenpunkte,

    e) Wiederholung der Schritte c) und d) unter Berücksichtigung der neu berechneten Netzpunkte solange ein Abbruchkriterium nicht erfüllt ist.

**9.** Computerprogramm für eine Steuereinheit zur Steuerung einer Speichereinheit, einer Bildwiedergabeeinheit, einer Berechnungseinheit und einer Anordnungseinheit einer Bildverarbeitungseinrichtung zur Durchführung des Verfahrens nach Anspruch 1 entsprechend den folgenden Schritten:

    a) Bereitstellen eines dreidimensionalen, deformierbaren Modells, dessen Oberfläche durch ein Netz mit Maschen gebildet ist, die Netzpunkte an der Oberfläche des Modells miteinander verbinden, wobei die Maschen in Gruppen eingeteilt sind und jede Gruppe eine Strukturfunktion aufweist,

    b) Anordnen des Modells an der Stelle im dreidimensionalen Datensatz, an der sich die zu segmentierende Struktur befindet,

    c) Bestimmen je eines Kandidatenpunktes für jede Masche mittels der Strukturfunktion derjenigen Gruppe, deren Mitglied die jeweilige Masche ist,

    d) Neuberechnen der Netzpunkte des Modells auf Basis der gefundenen Kandidatenpunkte,

    e) Wiederholung der Schritte c) und d) unter Berücksichtigung der neu berechneten Netzpunkte solange ein Abbruchkriterium nicht erfüllt ist.

Fig. 1

**Fig. 2**

100

| M | 102 |

104

| $F_j(\mathbf{x})$ | 106 |

| K | 108 |

| M ↔ data | 110 |

112 | $\hat{x}_i$ |

114 | $\min(E)$ |

116 | # | n

y

118

EP 1 437 685 A2

# Fig. 3

```
            ┌──────────┐
            │   data   │  200
            └────┬─────┘
                 ↓
            ┌──────────┐
            │  min(E)  │  202
            └────┬─────┘
                 ↓
            ┌──────────┐
            │    G     │  204
            └────┬─────┘
                 ↓
            ┌──────────┐
            │    △     │  206
            └────┬─────┘
                 ↓
            ┌──────────┐
            │   Σ/n    │  208
            └────┬─────┘
                 ↓
     210    ┌──────────┐
            │    ↔     │
            └────┬─────┘
                 ↓
     212    ┌──────────┐
            │   Σ/n    │
            └────┬─────┘
                 ↓
     214      ◇ #  ◇ n
                 │ y
                 ↓
            ┌──────────┐
            │    ◆     │  216
            └────┬─────┘
                 ↓
            ┌──────────────┐
            │ M₁...Mₙ→M    │  218
            └──────────────┘
```

$M_1 ... M_n \rightarrow M$

12

# Fig. 4

# Fig. 5

**Fig. 6**